# FASCICULE DE BREVET EUROPEEN

(11) **EP 2 340 162 B1**
(45) Date de publication et mention de la délivrance du brevet: **08.03.2017**
(21) Numéro de dépôt: 09737024.1
(22) Date de dépôt: 21.08.2009
(51) Int. Cl.: B32B 5/02, B32B 1/00, B32B 7/00, B64C 1/00

(54) **ÉLÉMENT D'UN AÉRONEF COMPRENANT UN PANNEAU SANDWICH COMPOSITE RENFORCÉ**
Flugzeugbauteil enthaltend eine verstärkte Verbundstoff-Sandwichplatte
Aircraft member comprising a reinforced composite sandwich panel

(30) Priorité: 24.09.2008 FR 0805242
(43) Date de publication de la demande: 06.07.2011
(73) Titulaire: Société Lorraine de Construction Aéronautique (SLCA), 57190 Florange (FR)
(72) Inventeur: PACARY, Jean-Luc, F-92360 Meudon-la-Foret (FR); FRANCISCO, Paulo, F-95870 Bezons (FR)
(74) Mandataire: Gaillarde, Frédéric F. Ch.
(86) Numéro de dépôt international: PCT/FR2009/001020
(87) Numéro de publication internationale: WO 2010/034894

(56) Documents cités:
- EP-A- 2 008 807
- WO-A-01/47706
- US-A1- 2005 025 948
- US-A1- 2008 145 592
- US-B1- 6 743 504

## Description

La présente invention se rapporte à un élément d'aéronef comprenant un panneau sandwich composite.

Les panneaux sandwich composite sont des matériaux de plus en plus fréquemment utilisés dans des applications diverses en raison de leurs excellente propriétés mécaniques eu égard à leur faible masse.

Un panneau sandwich composite comprend de manière générale une couche centrale formant une âme enserrée, prise en sandwich, entre une peau interne et une peau externe réalisée en matériau composite, c'est-à-dire constituée chacun d'un ou plusieurs plis fibreux pré-imprégnés de résine qui est ensuite polymérisée lors d'une étape de cuisson.

Le document US2005/0025948 A1 décrit un panneau composite de ce type.

D'autres procédés utilisent des plis fibreux secs, c'est-à-dire non pré-imprégnés de résine, la résine étant appliquée ultérieurement lors d'une étape de cuisson au court de laquelle elle est forcée par aspiration à se diffuser entre les plis fibreux.

Bien évidemment, un panneau sandwich composite peut également comprendre plusieurs couches centrales, de même type ou de types différents, les couches centrales pouvant elles-mêmes être séparées par une couche de matériau composite.

Les couches centrales peuvent, par exemple, être de type alvéolaires, balsa, mousse, ou encore comprendre un ou plusieurs inserts fusibles.

Les panneaux sandwich composite utilisant une âme en nid d'abeille, balsa ou mousse, par exemple, aident à réduire la masse des objets tout en conservant voire augmentant leurs propriétés mécaniques.

Les peaux interne et/ou externe peuvent présenter des finitions particulières en fonction de l'application finale du panneau. Un exemple de finition pourra être des perçages à travers la peau interne dans le cas d'un panneau acoustique. D'autres exemples comprennent notamment des peaux conductrices, étanches, etc...

Un des domaines où l'utilisation de panneaux sandwich composite s'est particulièrement développé est le domaine aéronautique.

De tels panneaux sont notamment utilisés pour les planchers, cloisons, panneaux d'ailes, etc...

En effet, de nombreux panneaux, initialement réalisés en aluminium ont pu être remplacés par des panneaux sandwich composite, notamment comprenant une âme à structure alvéolaire de type Nomex, Kevlar ou métallique, par exemple, beaucoup plus légers et assurant d'excellentes propriétés mécaniques, ce qui permet un allègement important des avions et par voie de conséquence entraîne une réduction de la consommation de carburant.

Toutefois, les zones de courbures dans de tels panneaux sont généralement plus fragiles et doivent être renforcées car ces zones courbées constituent des zones de concentration de contraintes en raison de la flexion de la pièce. Pour ce faire, on utilise alors des ferrures ou de lourds renforts en tissus monolithique.

Par conséquent, il existe un besoin pour une solution permettant de renforcer efficacement des zones courbes d'un panneau sandwich composite sans impacter de manière trop importante sur la masse dudit panneau.

Pour ce faire, la présente invention se rapporte à un élément d'aéronef comprenant un panneau sandwich composite comportant au moins une âme alvéolaire comprise entre une peau interne et une peau externe, chaque peau étant réalisée en matériau composite à partir d'une pluralité de plis fibreux traités par de la résine, caractérisée en ce qu'une partie des plis de la peau interne et/ou de la peau externe s'étendent chacun au moins partiellement à travers l'âme, au niveau d'une zone interrompue de cette dernière, de manière à former ensemble au moins un renfort traversant s'étendant de la peau interne à la peau externe du panneau sandwich composite, le panneau possédant une section courbe, le renfort traversant étant situé dans la section courbe, sensiblement au milieu de celle-ci et étant réalisé perpendiculairement à la courbure du panneau, l'âme alvéolaire étant interrompue dans la section courbe au niveau dudit renfort de manière à ce que le renfort s'étende à travers le panneau sandwich.

Ainsi, en utilisant une partie des plis constituants la peau interne et / ou externe pour créer un renfort composite intégré au panneau, il est possible de renforcer localement le panneau sandwich composite à l'aide d'un renfort léger possédant en outre les excellentes propriétés mécaniques d'un matériau composite. Par ailleurs, les plis constitutifs de ce renforts appartenant également aux peaux interne et / ou externe, il s'ensuit que les efforts s'exerçant sur ces peaux peuvent être mieux repris par le renfort.

On notera également que ce renfort est rapporté ou fabriqué directement avec le panneau et totalement intégré à celui-ci. Il n'est donc plus nécessaire de rapporter un élément renfort, tel qu'une ferrure ou un tissu monolithique, qui doit être fixé dans le panneau et risque donc de fragiliser sa structure.

Avantageusement, le renfort traversant est réalisé à partir d'au moins un pli s'étendant de manière continue de la peau externe à la peau interne. Plus précisément, un même pli peut partir de la peau interne (respectivement externe), s'étendre à travers le panneau sandwich pour venir constituer le renfort traversant, puis continuer à s'étendre en constituant un pli de la peau externe (respectivement interne). Il en va de même pour la partie du panneau située de l'autre côté du renfort. Ainsi, un panneau peut même comprendre plusieurs renforts traversant formés de plis périphériques.

Avantageusement, le panneau est un panneau acoustique.

Selon une deuxième variante de réalisation du panneau sandwich composite, l'âme comprend une mousse.

La présente invention sera mieux comprise à l'aide de la description détaillée qui suit en regard du dessin annexé dans lequel la figure unique est une représentation schématique en coupe longitudinal d'un panneau sandwich composition selon l'invention présentant une section courbe.

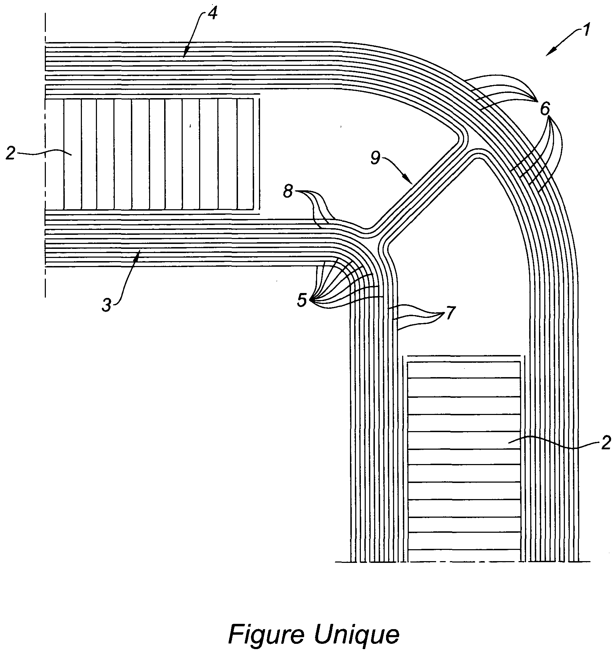

Un panneau sandwich composite 1 d'un élément d'aéronef l'invention, tel que représenté sur la figure 1 comprend une âme alvéolaire 2 comprise entre une peau interne 3 et une peau externe 4 composites réalisées chacune à partir de plis fibreux 5, 6, 7, 8 imprégné de résine polymérisée.

Le panneau sandwich composite 1 présente une section courbée constituant une zone de concentration de contraintes et forme donc une zone de fragilité de la pièce.

En conséquence, il est donc prévu un renfort traversant 9 formant un rayon de la section courbée et orientée sensiblement perpendiculairement à la courbure du panneau sandwich composite 1 dans cette zone.

Selon l'invention, le renfort traversant 9 s'étendant de la peau externe 4 à la peau interne 3 et est réalisé à partir d'une partie des plis fibreux appartenant auxdites peaux interne 3 et externe 4.

Bien évidemment, l'âme alvéolaire 2 est interrompu dans la section courbe au niveau dudit renfort 9 de manière à ce que ce dernier s'étende à travers le panneau sandwich 1.

Plus précisément, La peau externe 4 et la peau interne 3 comprennent des plis 5, 6 disposés vers l'extérieur du panneau sandwich 1 et s'étendant continûment le long du dit panneau à partir d'une section droite jusqu'à une deuxième section droite tout en suivant la section courbe.

La peau externe 4 et la peau interne 3 comprennent également des plis 7, 8 disposés vers l'intérieur du panneau sandwich 1 et s'étendant le long d'une section droite et sur une partie de la section courbe où ils vient former le renfort traversant 9.

Ainsi, comme représenté sur la figure 1, les plis 7 s'étendent continûment depuis la peau interne 3 le long de la section droite, traversent le panneau sandwich 1 au niveau de la section courbe en venant constituer une partie des plis du renfort 9 et avant de s'étendre au niveau de la peau externe 4 à nouveau le long de la section droite.

Il en va de même pour les plis 8 pour l'autre section droite.

Ainsi, au niveau de la section courbe, le renfort 9 est formé par les plis 7 et les plis 8 provenant des sections droites.

Les plis 7, 8 constituants le renfort 9 sont également imprégnés de résine polymérisée classiquement lors d'une étape finale de fabrication.

On notera que les plis 7, 8 peuvent continuer à s'étendre pour aller former un autre renforts 9 dans une autre section courbe, et former ainsi des plis périphériques.

Bien évidemment, les plis utilisés peuvent être de nature identique ou différente selon les propriétés recherchées.

Comme nature de plis classiquement utilisés, on pourra citer, les fibres de verre, les fibres de carbone, les fibres de kevlar, etc...

Bien évidemment le renforts peut également être formés de plis de nature identique ou différente selon les propriétés recherchées.

Dans le cas où les plis participants au renforts ne présenteraient pas à eux seuls une tenue suffisante ou devraient être renforcés, on pourra notamment coudre la totalité ou une partie de ces plis entre eux. On pourra également insérer dans le renfort, entre les plis, des plis de renforts, comme des plis de fibres de carbones par exemple.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention. On notera notamment que le renfort peut être réalisé lors d'une étape préliminaire avant application des plis des peux externe et interne dans une seconde étape. On pourra notamment utiliser des techniques de pré-imprégnation des plis fibreux ou d'infusion de la résine à travers lesdits plis.

## Revendications

1. Elément d'un aéronef, comprenant un panneau sandwich composite (1) comportant au moins une âme alvéolaire (2) comprise entre une peau interne (3) et une peau externe (4), chaque peau étant réalisée en matériau composite à partir d'une pluralité de plis fibreux (5, 6, 7, 8) traités par de la résine, **caractérisé en ce qu'**une partie des plis de la peau interne et/ou de la peau externe s'étendent chacun au moins partiellement à travers l'âme, au niveau d'une zone interrompue de cette dernière, de manière à former ensemble au moins un renfort (9) traversant s'étendant de la peau interne à la peau externe du panneau sandwich composite, le panneau possédant une section courbe, le renfort traversant (9) étant situé dans la section courbe, sensiblement au milieu de celle-ci, le renfort traversant (9) étant réalisé perpendiculairement à la courbure du panneau, l'âme alvéolaire étant interrompue dans la section courbe au niveau dudit renfort (9) de manière à ce que le renfort (9) s'étende à travers le panneau sandwich (1).

2. Elément d'un aéronef) selon la revendication 1, **caractérisé en ce que** le renfort (9) traversant est réalisé à partir d'au moins un pli (7, 8) s'étendant de manière continue de la peau externe à la peau interne.

3. Elément d'un aéronef selon la revendication 1 ou 2, **caractérisé en ce que** le panneau est un panneau acoustique.

4. Elément d'un aéronef selon l'une quelconque des revendications 1 à 3, **caractérisé en ce que** l'âme comprend une mousse.

## Patentansprüche

1. Element eines Luftfahrzeugs, eine Verbundstoff-Sandwichplatte (1) umfassend, die zumindest einen Wabenkern (2) umfasst, der zwischen einer Innenhülle (3) und einer Außenhülle (4) enthalten ist, wobei jede Hülle aus einem Verbundwerkstoff aus einer Vielzahl von faserigen Faltungen (5, 6, 7, 8) gefertigt ist, die mit Harz behandelt sind, **dadurch gekennzeichnet, dass** sich ein Teil der Faltungen der Innenhülle und/oder der Außenhülle jeweils zumindest teilweise durch den Kern, im Bereich einer unterbrochenen Zone von letzterem hindurch erstreckt, um gemeinsam zumindest eine quer verlaufende Verstärkung (9) zu bilden, die sich von der Innenhülle bis zur Außenhülle der Verbundstoff-Sandwichplatte erstreckt, wobei die Platte einen gekrümmten Abschnitt besitzt, wobei sich die quer verlaufende Verstärkung (9) im gekrümmten Abschnitt im Wesentlichen in der Mitte desselben befindet, wobei die quer verlaufende Verstärkung (9) senkrecht zur Krümmung der Platte ausgeführt ist, wobei der Wabenkern im gekrümmten Abschnitt im Bereich der besagten Verstärkung (9) unterbrochen ist, sodass sich die Verstärkung (9) durch die Sandwichplatte (1) hindurch erstreckt.

2. Element eines Luftfahrzeugs nach Anspruch 1, **dadurch gekennzeichnet, dass** die quer verlaufende Verstärkung (9) ausgehend von zumindest einer Faltung (7, 8) erzeugt wird, die sich in fortlaufender Art und Weise von der Außenhülle bis zur Innenhülle erstreckt.

3. Element eines Luftfahrzeugs nach Anspruch 1 oder 2, **dadurch gekennzeichnet, dass** die Platte eine Akustikplatte ist.

4. Element eines Luftfahrzeugs nach einem der Ansprüche 1 bis 3, **dadurch gekennzeichnet, dass** der Kern einen Schaumstoff umfasst.

## Claims

1. A member of an aircraft, comprising a composite sandwich panel (1) including at least one cellular core (2) comprised between an inner skin (3) and an outer skin (4), each skin being made of composite material from a plurality of resin-treated fiber plies (5, 6, 7, 8), **characterized in that** a portion of the plies of the inner skin and/or the outer skin each extend at least partially through the core, at an interrupted area of said core, so as to form together at least one through-reinforcement (9) extending from the inner skin to the outer skin of the composite sandwich panel, the panel having a curved section, the through-reinforcement (9) being located in the curved section, substantially in the middle thereof, the through-reinforcement (9) being made perpendicularly to the curvature of the panel, the cellular core being interrupted in the curved section at said reinforcement (9) so that the reinforcement (9) extends through the sandwich panel (1).

2. The member of an aircraft according to claim 1, **characterized in that** the through-reinforcement (9) is made from at least one ply (7, 8) continuously extending from the outer skin to the inner skin.

3. The member of an aircraft according to claim 1 or 2, **characterized in that** the panel is an acoustic panel.

4. The member of an aircraft according to any one of claims 1 to 3, wherein the core comprises a foam.
